# EUROPÄISCHE PATENTANMELDUNG

(11) **EP 1 593 724 A1**
(43) Veröffentlichungstag der Anmeldung: **09.11.2005**
(21) Anmeldenummer: 04010706.2
(22) Anmeldetag: 05.05.2004
(51) Int. Cl.: C09J 5/06, C09J 7/04, C09J 175/04, C08J 5/12, B05C 11/10, B32B 7/12

(54) **Verwendung lösemittelbasierter Reaktivklebstoffe mit hohem Feststoffanteil zum Beschichten oder Laminieren flexibler Substrate, insbesondere textiler Substrate, bevorzugt mittels eines beheizten Sprühauftrags**

(71) Anmelder: IMATEP S.A., 1700 Fribourg (CH)
(72) Erfinder:
(74) Vertreter: Grünecker, Kinkeldey, Stockmair & Schwanhäusser Anwaltssozietät

(57) **Zusammenfassung**

Die vorliegende Erfindung betrifft die Verwendung eines lösemittelbasierten reaktiven Klebstoffsystems, insbesondere auf Basis einer lösemittelbasierten reaktiven 1-Komponentenformulierung, zum Beschichten oder Laminieren flexibler Substrate, insbesondere textiler Substrate, bevorzugt Textil mit Textil, mit Folien aller Art, mit Schaumstoff, mit Vliesen, mit Filz, sowie Körnern und Korund aller Art. Der Feststoffanteil dieses Klebstoffsystems beträgt mindestens 70 Gew.-%, insbesondere mindestens 75 Gew.-%, bevorzugt mindestens 80 Gew.-%, bezogen auf das Klebstoffsystem.

Weiter betrifft die Erfindung ein Sprühauftragssystem für lösemittelhaltige reaktive Klebstoffsysteme, mit einem Feststoffanteil von mindestens 70 Gew.-%, zum Beschichten und Laminieren flexibler Substrate, insbesondere textiler Substrate, mit Textilien, Vliesen, Filzen, Folien und Schaumstoffen aller Art, sowie Körnern und Korund aller Art. Das Auftragssystem umfasst eine Heizeinrichtung zum Aufnehmen und Erwärmen des Klebstoffs, eine Druckerzeugungseinrichtung, eine wärmeisolierten und beheizten Leitung und mindestens eine Sprühdüse zum Auftragen des sprühfähigen Klebstoffs.

Ebenso betrifft die vorliegende Erfindung die Verwendung eines erfindungsgemäßen Auftragssystems zum Beschichten oder Laminieren flexibler Substrate, insbesondere textiler Substrate sowie ein Verfahren zum Auftragen eines lösemittelhaltigen, reaktiven Klebstoffssystems, mit einem Feststoffanteil von mindestens 70 Gew.-%, zum Beschichten oder Laminieren flexibler Substrate, insbesondere textiler Substrate.

## Beschreibung

Die vorliegende Erfindung betrifft die Verwendung lösemittelbasierter Reaktivklebstoffe mit hohem Festkörperanteil für textile Anwendungen, zum Beschichten oder Laminieren flexibler Substrate, insbesondere textiler Substrate, bevorzugt Textil mit Textil, mit Folien aller Art, mit Schaumstoff, mit Vliesen, mit Filz, sowie mit Körnern und Korund aller Art. Insbesondere basiert das verwendete Klebstoffsystem auf einer lösemittelbasierten reaktiven 1-Komponentenformulierung mit einem hohen Feststoffanteil. Weiter betrifft die Erfindung ein Auftragssystem für ein solchen lösemittelhaltigen, reaktiven Klebstoff zum Beschichten oder Laminieren flexibler Substrate, insbesondere textiler Substrate, und dessen Verwendung, sowie ein Verfahren zum Auftragen eines lösemittelbasierten Reaktivklebstoffs.

Bei der Herstellung insbesondere von Textillaminaten werden zur Beschichtung oder Laminieren flexibler Substrate, insbesondere textiler Substrate, mit Textil, Folien, Schaumstoff, Vliesen, Filz, Körnern und Korund etc. Klebstoffe mit hohen Lösemittelanteilen eingesetzt, die bevorzugt mittels eines Sprühauftrags auf die flexiblen Substrate aufgebracht werden. Die bisher in solchen Sprühverfahren eingesetzten Klebstoffe haben üblicherweise einen hohen Lösemittelanteil im Bereich von etwa 50 bis etwa 70 Gew.-%. Dieser hohe Lösemittelanteil ist erforderlich, um die Klebstoffe mit Sprühdüsen aufbringen zu können. Dabei kommt es beim Auftragen der eigentlich klebeaktiven Feststoffe zu einer hohen Emission von Lösemitteln mit einer erheblichen Belastung der Umgebung und des Bedienpersonals. Beim Aufsprühen solcher Klebstoffe mit hohem Lösemittelanteil müssen weiter auch große Mengen des Klebstoffs auf die textilen Substrate aufgetragen werden, um eine ausreichende Menge klebeaktiver Feststoffe auf dem Substrat zu erreichen.

Beim Beschichten oder Laminieren flexibler Substrate ist das Auftragverfahren für die eingesetzten Klebstoffe von zentraler Bedeutung, wobei die bisher eingesetzten Kleber generell von Dispersions- und lösemittelhaltigen Klebemitteln über thermoplastische und reaktive Schmelzkleber bis hin zu pulverförmigen Klebemitteln, Klebevliesen oder Klebefilmen reichen. Durch den hohen Lösemittelanteil herkömmlicher, für den Sprühauftrag bestimmter Klebstoffe müssen übliche Sprühauftragssysteme für die Verarbeitung großer Klebstoffmengen ausgelegt sein, weil der überwiegende Teil (nämlich der Lösemittelanteil) entfernt bzw. verdampft werden muss, da er für den eigentlichen Klebevorgang nicht benötigt wird. Auch müssen geeignete Anlagen zur Absaugung der hohen Lösemittelemission und die Filter zur Reinigung der Ablauft entsprechend groß dimensioniert sein.

Auch führen die großen Lösemittelmengen zu einer unnötigen Verteuerung der Klebstoffe, weil die Lösemittel für den eigentlichen Klebevorgang nicht benötigt werden.

Der vorliegenden Erfindung liegt daher die Aufgabe zugrunde ein lösemittelbasierten reaktiven Klebstoff für textile Anwendungen bereitzustellen, mit dem die zuvor geschilderten Nachteile des Standes der Technik im Wesentlichen vermieden oder zumindest verringert bzw. abschwächt werden. Weiter liegt der vorliegenden Erfindung die Aufgabe zugrunde, ein Auftragssystem bereitzustellen, das die Verwendung eines solchen Klebstoffs zum Beschichten oder Laminieren flexibler Substrate, insbesondere textiler Substrate, ermöglicht.

Gegenstand der vorliegenden Erfindung ist die Verwendung eines lösemittelbasierten reaktiven Klebstoffsystem zum Beschichten oder Laminieren flexibler Substrate, insbesondere textiler Substrate, bevorzugt Textil mit Textil, mit Folien aller Art, mit Schaumstoff, mit Vliesen, mit Filz, sowie Körnern und Korund aller Art, wobei der Feststoffanteil des Klebstoffsystems, bezogen auf das Klebstoffsystem, mindestens 70 Gew.-% beträgt.

Dies bedeutet, dass der Lösemittelgehalt, bezogen auf das Klebstoffsystem, höchstens 30 Gew.-% beträgt. Durch den erhöhten Feststoffanteil kann die zum Beschichten oder Laminieren notwendige Menge des Klebstoffs reduziert werden.

Bevorzugt kann das verwendete Klebstoffsystem auf einer reaktive 1-Komponentenformulierungen basieren, wobei das Klebstoffsystem neben mindestens einem Lösemittel als weitere Klebstoffkomponenten aufweist:
· isocyanatreaktive organische Polymere zusammen mit Isocyanaten und/oder
· NCO-terminierte Polyurethanprepolymere.

Der Feststoffanteil lösemittelbasierter Klebstoffsysteme lässt sich überraschenderweise drastisch erhöhen bzw. der Lösemittelanteil drastisch verringern, wenn derartige Klebstoffsysteme als reaktive 1-Komponentenformulierungen mit isocyanatreaktiven organischen Polymeren zusammen mit Isocyanaten oder mit NCO-terminierten Polyurethanprepolymeren als Klebstoffkomponenten formuliert werden. In derartigen Klebstoffsystemen lässt sich der Lösemittelgehalt auf unter 30 Gew.-%, bezogen auf das Klebstoffsystem, reduzieren bzw. der Feststoffanteil auf über 70 Gew.-%, bezogen auf das Klebstoffsystem, erhöhen. Dabei können die Klebstoffkomponenten in dem Lösemittel oder Lösemittelgemisch, welches im Allgemeinen organischer Natur bzw. organisch basiert ist, gelöst, d. h. in Lösung befindlich sein.

Eine weitere Ausgestaltung sieht vor, dass der Feststoffanteil, bezogen auf das Klebstoffsystem, mindestens 75 Gew.-%, insbesondere mindestens 80 Gew.-%, beträgt und/oder wobei der Feststoffanteil, bezogen auf das Klebstoffsystem, bis zu 95 Gew.- %, insbesondere bis zu 90 Gew.-%, beträgt. Durch den erhöhten Feststoffanteil wird die zum Beschichten oder Laminieren notwendige Menge des Klebstoffs weiter reduziert.

Die Erfindung bezieht sich weiter auf ein Auftragssystem für ein lösemittelhaltiges, reaktives Klebstoffsystem zum Beschichten oder Laminieren flexibler Substrate, insbesondere textiler Substrate, bevorzugt mit Textil-, Vlies-, Filz-, Folien- und Schaumstoff-Substraten sowie Körnern und Korund, mit:
· einer Heizeinrichtung zum Aufnehmen und Erwärmen des Klebstoffs mit einem Feststoffanteil von mindestens 70 Gew.-%, bezogen auf das Klebstoffsystem,
· einer Druckerzeugungseinrichtung zum Druckbeaufschlagen des erwärmten Klebstoffs,
· mindestens einer Sprühdüse zum Auftragen des sprühfähigen Klebstoffs auf eines der Substrate, und
· einer wärmeisolierten und beheizten Leitung zum Fördern des erwärmten und unter Druck stehenden Klebstoffs zu der mindestens einen Sprühdüse.

Dieses erfindungsgemäße Auftragssystem ermöglicht Klebstoff mit einem reduzierten Lösemittelanteil zum Beschichten oder Laminieren flexibler Substrate einzusetzen.

Eine günstige Ausführungsform sieht vor, dass die Heizeinrichtung ein Druckgefäß mit einem Heizmantel umfasst. Eine solche Heizeinrichtung ermöglicht durch die große Oberfläche des Heizmantels eine einfache Lösung zum Erwärmen des Klebers, wobei Temperaturspitzen und örtliche Überhitzungen, die die Funktionsfähigkeit des Klebers beeinträchtigen können, vermieden werden. Die Ausbildung der Heizeinrichtung als Druckgefäß ermöglicht es, den Kleber in der Heizeinrichtung unter Druck zu setzen und ihn so in einfacher Weise durch die Leitung zur Sprühdüse zu fördern. Dabei kann das Druckgefäß doppelwandig ausgebildet sein.

Um gleichmäßige Klebeeigenschaften des auf einem Substrat aufgetragenen Klebstoffs zu ermöglichen, kann das Druckgefäß ein Rührwerk zum Homogenisieren des Klebers umfassen. Dieses Rührwerk erreicht durch das Durchmischen des Klebers, dass dessen Bestandteile gleichmäßig verteilt sind und ermöglicht so eine homogene Zusammensetzung des zur Sprühdüse geförderten Klebers.

Vorteilhafterweise kann das Druckgefäß eine Füllstandsüberwachung umfassen. Eine solche Füllstandsüberwachung verhindert unbeabsichtigte Stillstandszeiten, da es ein rechtzeitiges Nachfüllen des Druckgefäßes ermöglicht. Die Füllstandüberwachung kann dabei als Stabsonde ausgebildet sein und durch das Erkennen von minimalen und maximalen Füllständen eine automatische Nachfüllung und eine Überfüllsicherung ermöglichen.

Für eine konstruktiv einfache Lösung zum Aufnehmen des Klebstoffsystems in der Heizeinrichtung kann die Heizeinrichtung mit einem Vorratsbehälter für Klebstoff verbunden sein, und ein Hilfsmittel zum Fördern des Klebers aus dem Vorratsbehälter in die Heizeinrichtung vorgesehen sein.

Eine zweckmäßige Ausgestaltung sieht vor, dass der Vorratsbehälter ein Transportgefäß, insbesondere ein Fass, und das Hilfsmittel eine Befüllungspumpe, insbesondere ein Fasspumpe, ist. Die Verwendung eines Transportgefäßes als Vorratsbehälter vermeidet das Umfüllen von Kleber aus einem Transportgebinde in einen entsprechenden Vorratsbehälter. Mittels der Befüllungspumpe kann der Klebstoff in einfacher Weise aus dem Vorratsbehälter in die Heizeinrichtung gefördert werden, wobei die Ausbildung als Fasspumpe eine besonders preiswerte Lösung darstellt.

Die wärmeisolierte und beheizte Leitung kann ein Heizschlauch, insbesondere ein PTFE-Druckschlauch, mit einem innenliegenden Heizleiter sein, zwischen beheiztem Druckbehälter und Sprühdüsen-Materialverteiler für den Kleber. Ein solcher Heizschlauch ermöglicht eine sichere und flexible Fördermöglichkeit für den erwärmten und unter Druck stehenden Klebstoff, auch bei einem hohen Betriebsdruck. Dabei kann bei einem PTFE-Druckschlauch durch eine Nylonflechtung eine hohe Druckbeständigkeit erreicht werden. Zur Vermeidung bzw. Minimierung von Wärmeverlusten ist ein solcher Heizschlauch mit einem innenliegenden Heizleiter versehen, der als Schlaufe verlegt und als elektrischer Widerstandsheizer ausgebildet sein kann.

Die mindestens eine Sprühdüse zum Auftragen des sprühfähigen Klebstoffsystems auf das flexible Substrat ermöglicht feinste Oberflächen, wobei die Anzahl der Sprühdüsen von der Arbeitsbreite des Substrats abhängt. Das Öffnen und Schließen der Zerstäuberluft kann mittels einer Innensteuerung erfolgen. Sämtliche materialführenden Teile der Sprühdüsen sind bevorzugt in Edelstahl, der Düsenkörper in einer hochfesten Leichtmetall-Legierung ausgeführt. Um ein Verkleben von Sprühdüsen durch den Kleber zu verhindern, kann die mindestens eine Sprühdüse des Auftragssystems einen Spülanschluss zum Reinigen der Sprühdüse aufweisen. Dabei kann ein Rückschlagventil vorgesehen sein, um ein Eindringen des Klebers in ein angeschlossenes Spüldüsensystem zum Reinigen der Sprühdüse zu verhindern. Dieses Spüldüsensystem kann mindestens einen Spülmittelvorratsbehälter, insbesondere ein Materialdruckgefäß für Spülmittel, eine Spülmittelleitung und eine vollautomatische Spüldüse mit Spülmittelverteiler und Spülmittelfilter umfassen.

Günstigerweise kann das Auftragssystem eine Stickstoffbeaufschlagung zum Schutz des reaktiven Klebstoffs in der Heizeinrichtung und/oder dem Vorratsbehälter aufweisen. Eine solche Stickstoffversorgungseinheit verhindert eine unbeabsichtigte Reaktion des Klebers und schützt damit die Heizeinrichtung und den Vorratsbehälter vor einer Ablagerung von Reaktionsprodukten, Verstopfen von Förderöffnungen und Fördermitteln, sowie letztendlich einem Aushärten des gesamten Kleberinhalts und bewahrt dadurch das Auftragssystem vor sonst notwendigen Reinigungs- und Austauschstillständen. Dabei kann die Stickstoffversorgungseinheit in einer einfachen Form als Stickstoffbehälter, insbesondere in Flaschenform, mit entsprechenden Leitungen und Armaturen zur Stickstoffbeaufschlagung der Heizeinrichtung und/oder dem Vorratsbehälter ausgebildet sein. Gleichzeitig kann die Stickstoffversorgungseinheit zum Druckbeaufschlagen des erwärmten Klebers und somit zur Förderung des Klebers durch die wärmeisolierte und beheizte Leitung zur Sprühdüse eingesetzt werden.

Eine bevorzugte Ausführung sieht vor, dass die Heizeinrichtung zum Aufnehmen und Erwärmen des Klebstoffs ausgebildet ist, wobei der Feststoffanteil, bezogen auf das Klebstoffsystem, mindestens 75 Gew.-%, insbesondere mindestens 80 Gew.-%, beträgt und/oder wobei der Feststoffanteil, bezogen auf das Klebstoffsystem, bis zu 95 Gew.-%, insbesondere bis zu 90 Gew.-%, beträgt. Durch die Verringerung des Lösemittelanteils auf höchstens 25 Gew.-% muss durch die Heizeinrichtung noch weniger Klebstoff aufgenommen und erwärmt werden sowie im Weiteren durch die Sprühdüse auf die Substratoberfläche aufgetragen werden. Dadurch reduziert sich gleichermaßen die Menge des darauf aufgetragenen Klebers. Durch einen erhöhten Feststoffanteil von mindestens 75 Gew.-% reduziert sich die von dem Auftragssystem ausgehende Emissionsbelastung gegenüber herkömmlichen Klebemitteln mit hohem Lösemittelanteil auf unter 15 % bis 35 %.

Die vorliegende Erfindung erstreckt sich weiter auf ein Verfahren zum Auftragen eines lösemittelhaltigen, reaktiven Klebstoffsystems zum Beschichten oder Laminieren flexibler Substrate, insbesondere textiler Substrate, bevorzugt mit Textil-, Vlies-, Filz-, Folien- und Schaumstoff-Substraten, sowie Körnern und Korund, mit den Schritten:
· Aufnehmen und Erwärmen des Klebstoffs mit einem Feststoffanteil von mindestens 70 Gew.-%, bezogen auf das Klebstoffsystem,
· unter Druck setzen des erwärmten Klebstoffs durch eine Druckerzeugungseinrichtung,
· Fördern des erwärmten und unter Druck stehenden Klebstoffs in einer wärmeisolierten und beheizten Leitung zu mindestens einer Sprühdüse,
· Auftragen des sprühfähigen Klebstoffs auf eines der Substrate mittels der mindestens einen Sprühdüse.

Das Auftragen eines lösemittelhaltigen, reaktiven Klebstoffs mit einem hohen Feststoffanteil reduziert die für ein solches Verfahren notwendige Menge von Lösemitteln in einem erheblichen Umfang. Dadurch reduziert sich auch die in diesem Verfahren aufzunehmende, zu erwärmende, zu fördernde und aufzutragende Menge des Klebers und ermöglicht so kleinere Abmessungen des zugehörigen Auftragssystems und notwendiger Absauganlagen.

Der Klebstoff in der Heizeinrichtung kann auf einfache Weise mittels eines Rührwerks homogenisiert werden. Das Homogenisieren durch ein Rührwerk führt zu einer gleichmäßigen Verteilung der Komponenten des Klebstoffsystems und ermöglicht dadurch ein gleichbleibend leichtes Fördern des Klebstoffs sowie ein gleichbleibendes Sprüh- und Verteilungsverhalten des Klebers beim Auftragen mit der Sprühdüse.

Für ein einfaches, bedarfsorientiertes Aufnehmen des Klebers in der Heizeinrichtung kann die Heizeinrichtung mit einem Hilfsmittel aus einem Vorratsbehälter mit Klebstoff befüllt werden.

Vorteilhafterweise kann der Klebstoff auf eine Temperatur zwischen 40°C und 70°C, bevorzugt zwischen 50°C und 60°C, erwärmt werden. Bei einer solchen Temperatur ist trotz eines weiterhin ausreichenden Reaktionszeitraums die Viskosität des Klebers geringer und der Kleber dadurch sprühfähiger.

Zum Schutz vor einer unbeabsichtigten Reaktion des Klebstoffs vor dem Auftrag des Klebers auf das eines der Substrate kann der Klebstoff mittels einer Stickstoffbeaufschlagungseinheit unter Druck gesetzt werden. Gleichzeitig kann die Druckbeaufschlagung des Klebstoffs durch den Stickstoff zum Fördern des Klebers aus der Heizeinrichtung zur Sprühdüse genutzt werden.

Eine Variante des Verfahrens sieht vor, dass der Feststoffanteil des Klebstoff, bezogen auf das Klebstoffsystem, mindestens 75 Gew.-%, insbesondere mindestens 80 Gew.-%, beträgt und/oder wobei der Feststoffanteil, bezogen auf das Klebstoffsystem, bis zu 95 Gew.-%, insbesondere bis zu 90 Gew.-%, beträgt. Durch den geringeren Lösemittelanteil reduziert sich der zu verarbeitende Volumenstrom.

Die Erfindung betrifft weiter die Verwendung eines Auftragssystems zum Beschichten oder Laminieren flexibler Substrate, insbesondere textiler Substrate, mit einer Heizeinrichtung, einer Druckerzeugungseinrichtung, einer wärmeisolierten und/oder beheizten Leitung und mindestens einer Sprühdüse nach einem der Ansprüche 4 bis 14, zum Auftragen eines lösemittelhaltigen, reaktiven Klebstoffsystems mit einem Feststoffanteil von mindestens 70 Gew.-%, bezogen auf das Klebstoffsystem. Die erfindungsgemäße Verwendung eines solchen Auftragssystems zum Auftragen eines lösemittelhaltigen, reaktiven Klebers mit einem Feststoffanteil von mindestens 70 Gew.- % ermöglicht eine deutliche Reduktion des Lösemitteleinsatzes und der damit einhergehenden Lösemittelemission, sowie einen verringerten Klebstoffauftrag bei einer gleichbleibenden Klebewirkung und resultierender Schichtdicke des auf das Substrat aufgetragenen Klebers.

Bei einer bevorzugten Verwendung des Auftragssystems kann der Feststoffanteil des Klebstoffsystems, bezogen auf das Klebstoffsystem, mindestens 75 Gew.-%, insbesondere mindestens 80 Gew.-%, betragen und/oder wobei der Feststoffanteil, bezogen auf das Klebstoffsystem, bis zu 95 Gew.-%, insbesondere bis zu 90 Gew.-%, betragen. Hierdurch lässt sich die Reduktion der Lösemittel und deren Emission sowie die Verringerung der aufgetragenen Klebstoffmenge verstärken.

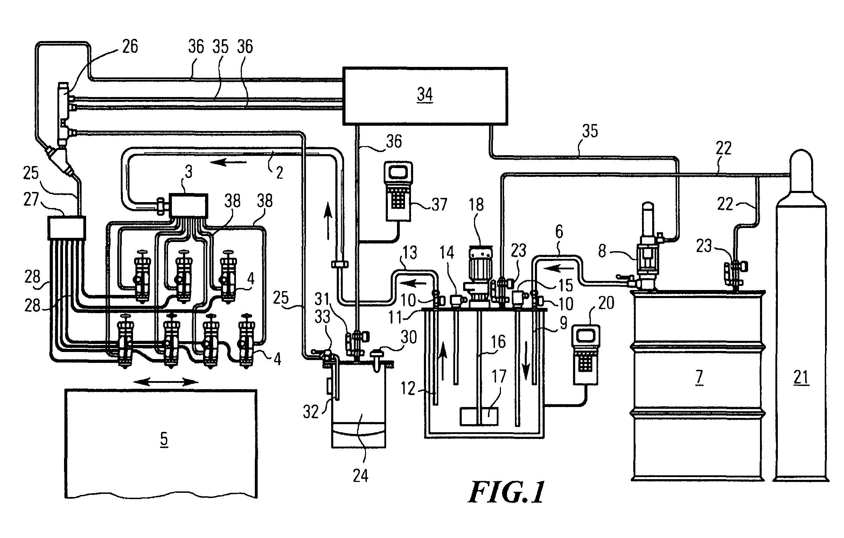

Im Folgenden wird eine Ausführungsform der vorliegenden Erfindung anhand einer Zeichnung näher erläutert, wobei die Fig. 1 eine Seitenansicht des erfindungsgemäßen Auftragssystems zeigt.

Das in Fig. 1 dargestellte Auftragssystem zeigt ein Sprühauftragssystem für einen lösemittelhaltigen reaktiven Kleber zum Laminieren textiler Anwendungen, beispielsweise Beschichten oder Laminieren flexibler Substrate, insbesondere textiler Substrate, mit Textilien, Vliesen, Filzen, Folien und Schaumstoffen aller Art sowie Körnern und Korund aller Art. Das Sprühauftragssystem umfasst ein Materialdruckgefäß 1 zum Aufnehmen und Erwärmen des Klebers, sowie einen Heizschlauch 2 zum Transportieren und einen Materialverteiler 3 zum Aufteilen des Klebers auf die vollautomatischen Sprühdüsen 4, die den Kleber auf ein unter den Sprühdüsen 4 geführtes Substrat aufsprühen, wobei neben einem textilen Substrat 5 auch Substrate auf Basis von Vlies, Filz, Folien und Schaumstoff besprüht werden können.

Das Materialdruckgefäß 1 ist durch einen Befüllungsschlauch 6 mit einem Vorratsbehälter 7 für den Klebstoff verbunden. Dabei ist der Vorratsbehälter 7 ein auch für den Transport des Klebers vom Hersteller eingesetztes Fass, bevorzugt ein 200 I Fass, mit einem Spundloch (nicht gezeigt). In dieses Spundloch ist eine Fasspumpe 8 eingesetzt, die den Kleber aus dem Vorratsbehälter 7 durch den Befüllurtgsschlauch 6 in das Materialdruckgefäß 1 pumpt. Dabei ist der Befüllungsschlauch 6 außerhalb des Materialdruckgefäßes 1 über den Kugelhahn 10 an den Einfüllstutzen 9 angeschlossen. Der Einfüllstutzen 9 erstreckt sich durch den Deckel 11 des Materialdruckgefäßes 1 mit einem Fallrohr in das Behälterinnere hinein. Durch den Deckel 11 des Materialdruckgefäßes 1 erstrecken sich weiter der Auslaufstutzen 12 mit Steigrohr, der über einen weiteren Kugelhahn 10 und einen Verbindungsschlauch 13 mit dem Heizschlauch 2 verbunden ist, ein Temperatursensor 14, ein Füllstandssensor 15 sowie eine Antriebswelle 16 zum Antrieb des Rührwerks 17. Dabei wird das Rührwerk 17 über die Welle 16 von einem Elektromotor 18 angetrieben. Das Materialdruckgefäß 1 ist mit einem doppelwandigen Gehäuse 19 ausgeführt. In diesem doppelwandigen Gehäuse 19 ist ein druckloses Heizmantelsystem ausgebildet, das den im Materialdruckgefäß 1 befindlichen Kleber erwärmt. Das Heizmedium wird dabei durch einen Heizstab (nicht gezeigt) erwärmt und mittels eines Temperaturreglers und - begrenzers 20 auf der gewünschten Betriebstemperatur gehalten.

Das Auftragssystem umfasst weiter eine Stickstoffbeaufschlagungseinheit 21, die über Stickstoffleitungen 22 und Stickstoffarmaturen 23 das Materialdruckgefäß 1 und den Vorratsbehälter 7 für Kleber mit einer Stickstoffatmosphäre versorgt, um eine Reaktion des reaktiven Klebers in diesen Behältern zu verhindern.

Des Weiteren umfasst das Auftragssystem eine Spüleinrichtung, bestehend aus einem Druckgefäß 24 für Spülmittel, einer Spülmittelleitung 25, einer Spülpistole 26, einem Spülmittelverteiler 27 und Spülmittelzuleitungen 28 zu den Sprühdüsen 4. Das Druckgefäß 24 weist einen angeflanschten Deckel 29 auf, durch den ein Einfüllstutzen 30, eine Druckluftarmatur 31 und ein Auslaufstutzen 32 mit Steigrohr in das Innere des Druckgefäßes 24 hineinragen. Der Auslaufstutzen 32 ist über einen Absperrhahn 33 mit der Spülmittelleitung 25 verbunden.

Außerdem umfasst das Sprühauftragssystem eine Steuer- und Versorgungseinheit 34 für Druckluft, die über Steuerluftleitungen 35 die Fasspumpe 8 und die Spülpistole 26 ansteuert, sowie über Druckluftleitungen 36 das Druckgefäß 24 für Spülmittel, die Spülpistole 26 und die Spülmittelverteilung 27 mit Druckluft versorgt.

Für die Inbetriebnahme des Auftragssystems zum Sprühauftrag lösemittelhaltiger reaktiver Kleber zum Laminieren flexibler Substrate werden zunächst der Vorratsbehälter 7 und das Materialdruckgefäß 1 über die Stickstoffversorgungseinheit 21 an den Stickstoffkreislauf angeschlossen und die möglicherweise im Materialdruckgefäß 1 vorhandene Luft , bzw. der darin enthaltene Wasserdampf, durch Stickstoff ersetzt. Anschließend wird der Kleber aus dem Vorratsbehälter 7 durch die von der Drucklufteinheit 34 angesteuerte Fasspumpe 8 über den Befüllungsschlauch 6 sowie den Einfüllstutzen 9 in das Materialdruckgefäß 1 gefördert, bis der Füllstandssensor 15 einen maximalen Füllstand detektiert und die Befüllung des Materialdruckgefäßes 1 durch die Fasspumpe 8 beendet wird.

Im Materialdruckgefäß 1 wird der Kleber durch das Heizmantelsystem im doppelwandigen Gehäuse 19 des Materialdruckgefäßes 1 auf Betriebstemperatur erwärmt und gleichzeitig durch das Rührwerk 17 homogenisiert. Dabei wird die Betriebstemperatur des Klebers durch den Temperatursensor 14 überwacht, während die indirekte Erwärmung über das Heizmedium im doppelwandigen Gehäuse 19 durch die Heizungssteuerung 20 gesteuert wird.

Durch die Erwärmung des Klebers in dem Materialdruckgefäß 1 wird die Viskosität (nach Brookfield) des Klebers von 4000 bis 5000 mPa·s bei Raumtemperatur (25°C) soweit reduziert, dass der Kleber in dem erfindungsgemäßen Auftragssystem versprüht werden kann und ein für die Beschichtung oder Laminieren flexibler Substrate, insbesondere textiler Substrate, geeignetes Sprühauftragsbild erzielbar ist.

Der in dem Materialdruckgefäß 1 erwärmte, sprühfähige Kleber wird durch den von der Stickstoffversorgungseinheit 21 über die Stickstoffarmatur 23 im Materialdruckgefäß 1 erzeugten Überdruck, bevorzugter Betriebsdruck 8 bar, durch das Steigrohr des Auslaufstutzens 12 und den Verbindungsschlauch 13 in den Heizschlauch 2 gefördert. In dem Heizschlauch 2, der hier als PTFE-Druckschlauch mit Nylonflechtung als Druckträger ausgebildet ist, wird die Temperatur des Klebers durch die Heizungssteuerung 37 überwacht und gegebenenfalls durch einen schlaufenartig im Heizschlauch 2 verlegten elektrischen Heizleiter im Betriebstemperaturbereich gehalten.

Durch den Heizschlauch 2 gelangt der Kleber in den isolierten Materialverteiler 3 und wird dort auf die Sprühdüsenleitungen 38 verteilt und gelangt so zu den vollautomatischen Sprühdüsen 4. Die Sprühdüsen 4 werden über Steuerluftanschlüsse (nicht gezeigt) durch die Drucklufteinheit 34 gesteuert und erhalten von der Drucklufteinheit 34 in separaten Druckluftzuleitungen (nicht gezeigt) eine Zerstäubungsluftzufuhr zum Zerstäuben des Klebers. Die Anzahl der Sprühdüsen 4 ist abhängig von der Arbeitsbreite des textilen Substrates 5. Die Steuerung der Zerstäuberluft sowie die Auswahl der Düseneinlage, Breit- oder Rundstrahl-Düseneinlagen, sind abhängig von dem gewünschten Sprühauftragsbild und weiteren Betriebsparametern.

Die vollautomatischen Sprühdüsen 4 sind weiter mit einem Spülanschluss mit Rückschlagventil (nicht gezeigt) versehen, an denen die Spülmittelzuleitungen 28 angeschlossen sind. Zum Spülen der Sprühdüsen 4 muss zunächst das Druckgefäß 24 für Spülmittel über den Spülmitteleinfüllstutzen 30 mit Spülmittel gefüllt und von der Drucklufteinheit 34 über die Druckluftleitungen 36 und die Druckluftarmatur 31 unter Druck gesetzt sein. Zum Spülen der Sprühdüsen 4 kann dann manuell der Absperrhahn 33 geöffnet werden. Daraufhin strömt durch den Überdruck im Druckgefäß 24 Spülmittel über das Steigrohr des Auslaufstutzens 32 in die Spülmittelleitung 25 und von dort in die Spülpistole 26. In der Spülpistole 26 wird das Spülmittel zerstäubt und weiter unter Druck gesetzt, bevor es im Spülmittelverteiler 27 auf die einzelnen Spülmittelzuleitungen 28 verteilt und von dort zur Reinigung der Sprühdüsen 4 in den Spülanschluss der Sprühdüsen 4 gelangt.

Im Betrieb überwacht der als vollisolierte Stabsonde ausgebildete Füllstandssensor 15 ständig den Füllstand des Klebers im Materialdruckgefäß 1. Dabei wird über eine Regelungseinheit (nicht gezeigt) bei einem minimalen Füllstand eine automatische Nachbefüllung des Materialdruckgefäßes 1 aus dem Vorratsbehälter 7 durch die von der Drucklufteinheit 34 angesteuerte Fasspumpe 8 bewirkt. Ebenso wird bei einem maximalen Füllstand der Befüllungsvorgang durch die Regelungseinheit beendet.

Trotz des sehr hohen Feststoffanteils bzw. eines sehr geringen Lösemittelanteils ist der Kleber dennoch ausreichend flüssig bzw. viskos, um in dem erfindungsgemäßen Sprühauftragssystem aus dem Vorratsbehälter 7 in das Materialdruckgefäß 1 gefördert sowie im erwärmten und unter Druck gesetzten Zustand von den vollautomatischen Sprühdüsen 4 auf ein Substrat aufgetragen zu werden. Dabei liegt das Klebstoffsystem bzw. die reaktive 1-Komponentenformulierung als vorzugsweise homogene Lösung vor.

Nach dem Auftrag des Klebstoffsystems auf ein flexibles, insbesondere textiles Substrat und gegebenenfalls kurzer Ablüftungszeit, welche gegenüber dem Stand der Technik aufgrund des geringeren Lösemittelanteils deutlich reduziert ist, werden die textilen Substrate, mit Textilien, Folien, Schaumstoffe, Vliese, Filze, Körnern, Korund etc., beschichtet bzw. miteinander verklebt, sowie gegebenenfalls laminiert oder kaschiert. Bereits unmittelbar nach dem Verkleben liegt eine gute Verarbeitungsfestigkeit vor. Die verklebten Substrate zeigen eine ausgezeichnete Wärme- und Wasserbeständigkeit, eine gute Kälteflexibilität sowie einen weichen Griff auf.

Im Allgemeinen weist das Klebstoffsystem eine Viskosität (Brookfield) bei Raumtemperatur (25 °C) von höchstens 6.000 mPa·s, insbesondere von höchstens 5.000 mPa·s, vorzugsweise von höchstens 4.500 mPa·s, besonders bevorzugt von höchstens 4.250 mPa·s auf. Durch eine geeignete Wahl der Ausgangspolymere und Dosierung der reaktiven Rohstoffe sowie Optimierungen in der Lösemittelzusammensetzung kann die Verarbeitungsviskosität so weit reduziert werden, dass das Klebstoffsystem sowohl automatischen als auch manuellen auf die zu verklebenden Substrate aufgetragen werden kann.

Der Feststoffanteil des erfindungsgemäßen Klebstoffsystems wird im Allgemeinen ausschließlich oder überwiegend durch die vorgenannten Klebstoffkomponenten, isocyanatreaktive organische Polymere zusammen mit Isocyanaten, im Folgenden kurz mit (A) bezeichnet, und/oder NCO-terminierte Polyurethanprepolymere, im Folgenden kurz mit (B) bezeichnet, bereitgestellt. Das Klebstoffsystem kann jedoch auch weitere Klebstoffkomponenten bzw. weitere Inhaltsstoffe enthalten, die den Feststoffanteil gegebenenfalls mitbestimmen. Im allgemeinen liegt der Gehalt an den vorgenannten Klebstoffkomponenten (A) und/oder (B), bezogen auf das Klebstoffsystem, im Bereich von 10 bis 90 Gew.-%, insbesondere 20 bis 85 Gew.-%, vorzugsweise 30 bis 80 Gew.-%.

In einer weiteren Ausgestaltung kann der Kleber bei Raumtemperatur (25°C) im allgemeinen eine Dichte p ≥ 0,9 g/cm³ insbesondere ≥ 1,0 g/cm³, vorzugsweise ≥ 1,1 g/cm³, aufweisen. Um eine Förderung des Klebers aus dem Vorratsbehälter 7 in das Materialdruckgefäß 1 zu gewährleisten, ohne den Kleber bereits im Vorratsbehälter 7 erwärmen zu müssen, ist der Kleber bei Raumtemperatur (25°C) flüssig, zumindest jedoch bei Temperaturen ab 50 °C, vorzugsweise ab 45 °C, besonders bevorzugt ab 40 °C.

Das eingesetzte Lösemittel weist in bezug auf die Klebstoffkomponenten des Klebstoffsystems bzw. weiterer Inhaltsstoffe eine gute Löslichkeit bzw. ein gutes Lösevermögen auf. Dabei liegen im Allgemeinen sämtliche Bestandteile bzw. Inhaltsstoffe des Klebers in einer in dem Lösemittel oder Lösemittelgemisch gelösten Form vor, wobei es sich im Allgemeinen um organische bzw. organisch-basierte Lösemittel handelt.

Bevorzugte Lösemittel weisen unter Atmosphärendruck einen Siedepunkt im Bereich von 35 °C bis 100 °C, insbesondere von 45 °C bis 90 °C, vorzugsweise von 50 °C bis 80 °C auf, sowie einen Schmelzpunkt im Bereich von -120 °C bis -60 °C, insbesondere von -100 °C bis -80 °C, auf. Auch sollten die verwendeten Lösemittel eine relativ hohe Flüchtigkeit bzw. einen relativ hohen Dampfdruck aufweisen, Vorteilhafterweise (bei 20 °C) mindestens 15 kPa, insbesondere mindestens 20 kPa, vorzugsweise mindestens 25 kPa auf. Beispielsweise besitzt Aceton bei 20 °C einen Dampfdruck von 23,3 kPa und Ethylether von 58,5 kPa.

Bevorzugte Lösemittel besitzen weiter eine gewisse Polarität, da polare Lösemittel ein gutes Lösevermögen in bezug auf die Klebstoffkomponenten (A) und (B) besitzen, so dass sich der Lösemittelanteil entsprechend reduzieren lässt. Bevorzugte Lösemittel besitzen Lösemittelpolaritäten, berechnet als sogenannte E_{T}-Werte (Z-Werte) nach Kosower, von mindestens 35 (56), insbesondere von mindestens 37,5 (60), vorzugsweise mindestens 40 (63,5), besonders bevorzugt mindestens 42 (66). Aceton besitzt beispielsweise einen E_{T}-Wert (Z-Wert) nach Kosower von 42,2 (65,7).

Vorzugsweise ist das eingesetzte Lösemittel ausgewählt aus Ketonen (z. B. Aceton, Butanon bzw. Methylethylketon, Cyclohexanon etc.) und/oder organischen Estern (Essigsäureestern wie Methyl- und Ethylacetat, Glykolester etc.) oder aus einer Mischung von jeweils verschiedenen Ketonen und/oder organischen Estern. In einer besonders bevorzugten Ausführungsform ist das Lösemittel ausgewählt aus Aceton, Methylethylketon (MEK) und/oder Ethylacetat. Den vorgenannten Lösemitteln können gegebenenfalls weitere Lösemittel beigemischt sein, insbesondere Kohlenwasserstoffe, wie z. B. aliphatische C₅-C₂₀-Kohtenwasserstoffe. Obgleich Kohlenwasserstoffe in bezug auf die Klebstoffkomponenten (A) bzw. (B) ein nur mäßiges bis geringes Lösevermögen besitzen, eignen sich dennoch in Beimischung mit den vorgenannten Lösemitteln, insbesondere mit Aceton, Methylethylketon und/oder Ethylacetat, sozusagen als Verdünnungsmittel.

Was die isocyanatreaktiven organischen Polymere der Klebstoffkomponente (A) allbelangt, so ist dieser Begriff im Rahmen der vorliegenden Erfindung sehr weit zu verstehen und umfasst alle Arten isocyanatreaktiver organischer Polymere, hierunter auch sogenannte Copolymere.

Im Allgemeinen weisen die isocyanatreaktiven organischen Polymere der Klebstoffkomponente (A) mindestens zwei isocyanatreaktive Gruppen pro Molekül auf. Diese isocyanatreaktiven Gruppen sind insbesondere ausgewählt aus Hydroxyl-, Amino-, Carboxyl-, Carbonsäureanhydrid-, Mercapto-, Silyl- und/oder Carbonamidgruppen, bevorzugt Hydroxyl- und Aminogruppen, besonders bevorzugt Hydroxylgruppen.

Im Allgemeinen leiten sich die isocyanatreaktiven organischen Polymere der Klebstoffkomponente (A) von isocyanatreaktiven Polymeren und/oder Copolymeren ab und sind insbesondere ausgewählt aus der Gruppe von isocyanatreaktiven Polyestern, Polycaprolactonpolyestern, Polyethern, Polyetherestern, Polyurethanen, Polyesterpolyurethanen, Polyamiden, Polytetrahydrofuranen, Polyacrylaten, Polymethacrylaten sowie deren Copolymeren und Mischungen, jeweils mit isocyanatreaktiven Gruppen, insbesondere Hydroxylfunktionen.

Gemäß einer Ausführung sind die isocyanatreaktiven organischen Polymere der Klebstoffkomponente (A) ausgewählt aus hydroxylfunktionalisierten Polymeren, besonders bevorzugt aus der Gruppe von hydroxylfunktionalisierten Polyestern, hydroxylfunktionalisierten Polyethern, hydroxylfunktionalisierten Polyetherestern, hydroxylfunktionalisierten Polyurethanen und/oder hydroxylfunktionalisierten Polyesterpolyurethanen, welche Vorteilhafterweise mindestens zwei Hydroxylgruppen je Molekül aufweisen. Ganz besonders bevorzugt sind hydroxylfunktionalisierte Polyether, Polyester und/oder Polyurethane.

Überraschenderweise hat sich gezeigt, dass auch das Molekulargewicht der isocyanatreaktiven organischen Polymere der Klebstoffkomponente (A) ein Parameter ist, der bei der Einstellung des Feststoffanteils bzw. Lösemittelanteils des erfindungsgemäßen Klebstoffsystems zu beachten ist. Insbesondere sollten die eingesetzten isocyanatreaktiven organischen Polymere der Klebstoffkomponente (A) gewichtsmittlere Molekulargewichte von mehr als 1.000 g/mol und von weniger als 10.000 g/mol aufweisen. Im Allgemeinen sollten die gewichtsmittleren Molekulargewichte der eingesetzten isocyanatreaktiven organischen Polymere der Klebstoffkomponente (A) 2.000 bis 10.000 g/mol, insbesondere 2.500 bis 8.000 g/mol, vorzugsweise 3.000 bis 6.000 g/mol, betragen.

In bevorzugter Weise werden als isocyanatreaktive organische Polymere der Klebstoffkomponente (A) zumindest im Wesentlichen lineare Polymere.eingesetzt, insbesondere mit Molekulargewichten im Bereich von 3.000 bis 10.000 g/mol, vorzugsweise 3.000 bis 6.000 g/mol. Derartige isocyanatreaktive organische Polymere ermöglichen aufgrund ihrer relativ guten Lösbarkeit eine drastische Absenkung des Lösemittelanteils bzw. eine drastische Erhöhung des Feststoffanteils.

Was die Isocyanate der Klebstoffkomponente (A) anbelangt, so handelt es sich hierbei im Allgemeinen um organische Diisocyanate und/oder Polyisocyanate, vorzugsweise um organische monomere Diisocyanate. Insbesondere sind die Isocyanate ausgewählt aus vorzugsweise monomeren organischen Diisocyanaten, insbesondere aliphatischen, cycloaliphatischen und/oder aromatischen Diisocyanaten, Vorteilhafterweise mit freien endständigen NCO-Gruppen.

Vorteilhafterweise handelt es sich bei den eingesetzten Isocyanaten der Klebstoffkomponente (A) des Klebstoffsystems um ein aliphatisches System, insbesondere um aliphatische höher verzweigte Isocyanate. Grundsätzlich sind aber auch aromatische oder cycloaliphatische Isocyanate einsetzbar.

Insbesondere sind die Isocyanate der Klebstoffkomponente (A) ausgewählt aus der Gruppe von: Diisocyanatodiphenylmethanen (MDIs), insbesondere 4,4'-Diisocyanatodiphenylmethan und 2,4'-Diisocyanatodiphenylmethan, sowie Mischungen verschiedener Diisocyanatodiphenylmethane; 1,5-Diisocya-natonaphthalin (NDI); Diisocyanatotoluolen (TDIs), insbesondere 2,4-Diiso-cyanatotoluol, sowie TDI-Urethdionen, insbesondere dimerem 1-Methyl-2,4-phenylendiisocyanat (TDI-U), und TDI-Hamstoffen; 1-Isocyanato-3-isocya-natomethyl-3,5,5-trimethylcyclohexan (IPDI) und dessen Isomeren und Derivaten, insbesondere Di-, Tri- und Polymerisaten, sowie IPDI-Isocyanurat (IP-DI-T); 3,3'-Dimethylbiphenyl-4,4'-diisocyanat (TODI); 3,3'-Diisocyanato-4,4'-dimethyl-N,N'-diphenylhamstoff (TDIH); sowie Mischungen und Prepolymeren der vorgenannten Verbindungen. Erfindungsgemäß bevorzugt sind beispielsweise vorzugsweise monomeres 4,4'-Diisocyanatodiphenylmethan (Diphenylmethan-4,4'-diisocyanat, 4,4'-MDIs) und cycloaliphatische Polyisocyanate auf Basis von Isophorondiisocyanaten.

Gemäß einer besonderen Ausführungsform können die Isocyanate der Klebstoffkomponente (A) ausgewählt sein aus unsymmetrisch substituierten Diisocyanaten mit NCO-Gruppen unterschiedlicher Reaktivität, Ein Beispiel für unsymmetrisch substituierte Diisocyanate ist 2,4'-Diisocyanatodiphenylmethan. Ein Vorteil unsymmetrisch substituierter Diisocyanate liegt darin, dass die weniger reaktionsfähige NCO-Gruppe unreagiert im Reaktionsprodukt von Diisocyanat mit isocyanatreaktivem Polymer und für spätere Vernetzungsreaktionen beim Verkleben zur Verfügung steht. D.h. mit anderen Worten die Verwendung von unsymmetrisch substituierten Diisocyanaten mit NCO-Gruppen unterschiedlicher Reaktivität, wie insbesondere 2,4'-Diisocyanatodiphenylmethan, fuhrt dazu, dass die weniger reaktive NCO-Gruppe (im Fall des 2,4'-Diisocyanatodiphenylmethan die in 2-Position befindliche NCO-Gruppe) - im Gegensatz zu der reaktiveren NCO-Gruppe in 4'-Position - relativ reaktionsträge und folglich in der resultierenden Polyurethanzusammensetzung über einen längeren Zeitraum stabil vorhanden ist. Ein Beispiel für ein erfindungsgemäß geeignetes 2,4'-Diisocyanatodiphenylmethan ist das von der Elastogran GmbH, Lemförde, unter der Bezeichnung Lupranat® MCI vertriebene, bei Raumtemperatur als kristalliner Feststoff vorliegende Produkt.

Beispielsweise können die Isocyanate der Klebstoffkomponente (A) auch ein Gemisch aus 4,4'-Diisocyanatodiphenylmethan und 2,4'-Diisocyanatodiphenylmethan umfassen, vorzugsweise mit einem Gehalt an 2,4'-Diisocyanatodiphenylmethan von mehr als 20 Gew.-%, insbesondere von mehr als 30 Gew.-%, bevorzugt mehr als 40 Gew.%, ganz besonders bevorzugt mehr als 50 Gew.-%, bezogen auf das Diisocyanatgemisch. Beispiele für geeignete Gemische aus 4,4'-Diisocyanatodiphenylmethan und 2,4'-Diisocyanatodiphenylmethan sind das von der Bayer AG unter der Bezeichnung Desmodur® 2460 M und das von der Elastogran GmbH, Lemförde, unter der Bezeichnung Lupranat® MI vertriebene, bei Raumtemperatur flüssige Produktgemisch.

Gemäß einer weiteren Ausführungsform können die Isocyanate der Klebstoffkomponente (A) ausgewählt sein aus maskierten oder blockierten Diisocyanaten, welche insbesondere unter Wärme- und/oder Feuchtigkeitseinwirkung die blockierenden oder maskierenden Gruppen abspalten. Blockierte oder maskierte Diisocyanate dieser Art sind dem Fachmann aus dem Stand der Technik als solche bekannt.

Gemäß einer weiteren besonderen Ausführungsform können die Isocyanate der Klebstoffkomponente (A) aus verkapselten oder oberflächendesaktivierten Diisocyanaten, d. h. Diisocyanaten mit retardierter Reaktivität, ausgewählt sein. Verkapselte oder oberflächendesaktivierte Diisocyanate sind dem Fachmann als solche aus dem Stand der Technik bekannt. Als Desaktivierungsmittel werden insbesondere Verbindungen mit hydrophilen Gruppen, wie insbesondere Aminogruppen oder Hydroxylgruppen verwendet, die mit den freien Isocyanatgruppen der Isocyanate reagieren können und somit eine Art Oberflächenhülle auf den Diisocyanaten ausbilden, welche die Diisocyanate zunächst desaktivert (z. B. Amine, Diamine, Polyamine, Alkohole, Diole, Polyole oder die entsprechenden Thioverbindungen). Insbesondere wird das Desaktivierungsmittel in Art und Menge derart ausgewählt, dass die Verkapselung oder Oberflächendesaktivierung vorzugsweise bei Temperaturen oberhalb der Raumtemperatur aufgebrochen wird.

Die in der Klebstoffkomponente (A) vorhandenen isocyanatreaktiven organischen Polymere einerseits und Isocyanate andererseits werden im allgemeinen in einem solchen Mengenverhältnis zueinander eingesetzt, dass ein Überschuss an aus den Isocyanaten stammenden Isocyanatgruppen in bezug auf die isocyanatreaktiven Gruppen, insbesondere Hydroxylgruppen, der isocyanatreaktiven organischen Polymere vorliegt. Vorteilhafterweise ist dabei das Äquivalentverhältnis von Isocyanatgruppen der Isocyanate zu isocyanatreaktiven Gruppen, insbesondere Hydroxylgruppen, der isocyanatreaktiven organischen Polymere größer als 1,0, insbesondere größer als 1,05, vorzugsweise größer als 1,1, besonders bevorzugt größer als 1,2 und mehr. Dabei kann das Mengenverhältnis der in der Klebstoffkomponente (A) vorhandenen isocyanatreaktiven organischen Polymere einerseits und Isocyanate andererseits derart gewählt werden, dass das aus der Reaktion von isocyanatreaktiven organischen Polynieren einerseits und Isocyanaten andererseits resultierende Reaktionsprodukt (= Polyurethan) einen Gehalt an freien NCO-Gruppen von bis zu 3 Gew.-%, insbesondere von bis zu 5 Gew.-%, vorzugsweise von bis zu 10 Gew.-%, enthält.

Was die NCO-terminierten Polyurethanprepolymere der Klebstoffkomponente (B) anbelangt, so sind diese Vorteilhafterweise bei Raumtemperatur (25 °C) flüssig. Geeignete NCO-terminierte Polyurethanprepolymere sind durch Reaktion von isocyanatreaktiven organischen Polymeren mit organischen Isocyanaten erhältlich, wie sie beispielsweise in der Klebstoffkomponente (A) zum Einsatz kommen. Beispielsweise kann zur Herstellung eines geeigneten isocyanatterminierten Polyurethanprepolymers ein Di- oder Polyisocyanat mit mindestens einem isocyanatreaktiven Polymer umgesetzt werden, wobei nachfolgend etwaiges nichtreagiertes Di- oder Polyisocyanat entfernt werden kann, vorzugsweise durch Verdampfen bzw. Abdampfen oder durch Strippen mit mono- oder difunktionellen isocyanatreaktiven Additiven (z.B. Aminen, Alkoholen oder Mercaptanen).

Geeignete, insbesondere monomerfreie (d.h. frei von Diisocyanatmonomeren) NCO-terminierte Polyurethanprepolymere der Klebstoffkomponente (B) sind Vorteilhafterweise ausgewählt aus der Gruppe von MDI-Prepolymeren, TDI-Prepolymeren und MDI/TDI-Prepolymeren, d. h. leiten sich insbesondere von MDIs und/oder TDIs ab. Beispiele für geeignete, insbesondere monomerfreie isocyanatterminierte Polyurethanprepolymere sind die verschiedenen von der Fa. Dow Chemicals unter der Bezeichnung "Vorastar®" oder "Voramer® vertriebenen Produkte oder das von der Bayer AG unter der Bezeichnung Desmodur® VPKA 8697 vertriebene Produkt.

Bevorzugte NCO-terminierte Polyurethanprepolymere der Klebstoffkomponente (B) sind im wesentlichen vollkommen frei von monomeren Diisocyanaten oder weisen höchstens 0,1 Gew.-% monomere Diisocyanate, bezogen auf das isocyanatterminierte Polyurethanprepolymer, auf.

Um eine gute Verarbeitbarkeit, insbesondere einen guten Sprühauftrag, des Klebstoffs zu ermöglichen, weisen die eingesetzten NCO-terminierten Polyurethanprepolymere der Klebstoffkomponente (B) im allgemeinen Viskositäten (Brookfield) bei 20 °C von höchstens 10.000 mPa·s, insbesondere von höchstens 8.000 mPa·s, vorzugsweise von höchstens 5.000 mPa·s, besonders bevorzugt von höchstens 3.000 mPa·s, auf. Weiter weisen die NCO-terminierten Polyurethanprepolymere im allgemeinen einen Gehalt an freien NCO-Gruppen von bis zu 3 Gew.-%, insbesondere von bis zu 5 Gew.-%, vorzugsweise von bis zu 10 Gew.-%, besonders bevorzugt von bis zu 25 Gew.-%, auf, um eine gute Vernetzbarkeit der zu verklebenden Substrate zu gewährleisten.

Unabhängig davon, ob das Klebstoffsystem die Klebstoffkomponenten (A) und/oder (B) enthält, weist das Klebstoffsystem für eine gute Reaktivität mindestens 1 Gew.-%, insbesondere mindestens 2 Gew.-%, vorzugsweise mindestens 3 Gew.% oder mehr freie NCO-Gruppen auf, bezogen auf das Klebstoffsystem, wobei Vorteilhafterweise hiervon höchstens 0,1 Gew.-% durch monomere Diisocyanate bereitgestellt werden.

Darüber hinaus kann der Kleber mindestens eine nicht-isocyanatreaktive Komponente (C) umfassen. Diese kann aus der Gruppe nicht-isocyanatreaktiver Polymere, Harze, Wachse, Füllstoffe, Additive und/oder Lösemitteln ausgewählt sein. Durch diese Komponente verlängert sich die Reaktionszeit bzw. die Vernetzungszeit wird verzögert, wodurch der Verarbeitungszeitraum für den Kleber in dem erfindungsgemäßen Auftragssystem verlängert wird. Dabei variiert die Menge dieser nichtisocyanatreaktiven Komponente bezogen auf den Kleber in einem Bereich von 0,1 bis 30 Gew.-%, vorzugsweise 1 bis 30 Gew.-%, bevorzugt 5 bis 25 Gew.-%, bezogen auf das Klebstoffsystem.

Wenn als nicht-isocyanatreaktive Komponente (C) ein nicht-isocyanatreaktives Harz verwendet wird, so kann dieses ausgewählt sein aus der Gruppe von aliphatischen, cyclischen oder cycloaliphatischen Kohlenwasserstoffharzen, Terpenphenolharzen, Cumaron-Indenharzen, α-Methylstyrolharzen, polymerisierten Tallharzestern oder Ketonaldehydharzen. Dabei sollten die Harze eine niedrige Säurezahl aufweisen, vorzugsweise mit Werten kleiner als 1 mg KOH/g.

Wenn als nicht-isocyanatreaktive Komponente (C) nicht-isocyanatreaktive Polymere verwendet werden, so können diese insbesondere ausgewählt sein aus der Gruppe von (i) Ethylen/Vinylacetat-Polymeren oder -Copolymeren, insbesondere solchen mit Vinylacetat-Gehalten zwischen 12 und 40 Gew.-%, insbesondere 18 bis 28 Gew.-%, bzw. mit Schmelzindices (MFIs, DIN 53735) von 8 bis 800, insbesondere 150 bis 500; (ii) Polyolefinen, insbesondere mit mittleren Molekulargewichten von 5.000 bis 25.000 g/mol, vorzugsweise 10.000 bis 20.000 g/mol, bzw. mit Erweichungsbereich nach Ring und Kugel zwischen 80 und 170 °C, vorzugsweise zwischen 80 und 130 °C; und (iii) (Meth-)Acrylaten wie Styrol(meth-)acrylaten sowie Mischungen dieser Verbindungen.

Wenn als nicht-isocyanatreaktive Komponente (C) nicht-isocyanatreaktive Wachse verwendet werden, so können diese insbesondere ausgewählt sein aus der Gruppe von Polyolefinwachsen, insbesondere Polyethylen- und Polypropylenwachsen) sowie auf dieser Basis modifizierten Wachsen.

In einer weiterführenden Ausführungsform kann der Kleber außerdem mindestens einen Katalysator (D) enthalten, durch den die Reaktivität bzw. Vernetzung des Klebers modifiziert, insbesondere erhöht werden kann. Dabei beeinflusst der Katalysator insbesondere die Reaktion der isocyanatreaktiven organischen Polymere sowie der Isocyanate der Klebstoffkomponente (A), aber auch das Reaktivitätsverhalten des Klebstoffsystems insgesamt. Die Menge des Katalysators bewegt sich in einem Bereich von 0,01 bis 5 Gew.-%, bezogen auf das Klebstoffsystem.

Als Katalysatoren können die in der Polyurethanchemie gängigen und an sich bekannten Katalysatoren verwendet werden. Beispiele hierfür sind organische Zinnverbindungen, wie Dibutylzinndilaurat (DBTL), Alkylmercaptidverbindungen des Dibutylzinns oder aber organische Eisen-, Blei-, Cobalt-, Wismuth-, Antimon-, Zinkverbindungen und Mischungen der zuvor genannten Verbindungen sowie Katalysatoren auf Aminbasis wie tertiären Aminen, 1,4-Diazabicyclo[2.2.2]octan und Dimorpholinodiethylether sowie deren Mischungen.

Bei der Herstellung des für das Auftragssystem verwendeten Klebers werden bevorzugt die einzelnen Kleberkomponenten in das Lösemittel eingetragen und hierin gelöst. Jedoch kann aber auch umgekehrt das Lösemittel den einzelnen Komponenten bzw. Inhaltsstoffen zugesetzt werden. Das Lösen der Inhaltsstoffe kann durch Erwärmen und/oder den Eintrag von Scherkräften erleichtert werden. Durch das Erwärmen wird die Viskosität während des Herstellvorgangs gesenkt. Vorteilhafterweise erfolgt die Herstellung des Klebers unter einer Schutzgasatmosphäre, beispielsweise Stickstoff, sowie unter Ausschluss von Feuchtigkeit, um eine Reaktion der freien Isocyanat-Gruppen mit der Feuchtigkeit aus der Umgebung zu verhindern.

Die Vorteile des Klebstoffsystems können durch das folgende Beispiel veranschaulicht werden: Auf den im Markt befindlichen Anlagen zum Beschichten oder Laminieren von Textilien werden im allgemeinen Klebstoffe des Standes der Technik mit einem nur geringen Festkörperanteil von etwa 30 Gew.-% verarbeitet; bei einem Klebstoffbedarf von 30 g Festsubstanz/m² werden bei derartigen Klebern des Standes der Technik 100 g Klebstoff/m² benötigt, wovon 70 g auf das oder die Lösemittel entfällen. Dagegen wird bei einem festkörperreichen Klebstoffsystem gemäß der vorliegenden Erfindung mit beispielsweise 75 Gew.-% Festkörper- bzw. Feststoffanteil für den geforderten Auftrag von 30 g Festsubstanz/m² nur 40 g/m² Klebstoffmenge insgesamt pro Flächeneinheit benötigt, wobei der Lösemittelanteil sich von 70 g/m² (Stand der Technik) auf nur 10 g/m² (bei der erfindungsgemäßen Verwendung) also auf weniger als 15 % der Menge des Standes der Technik reduziert. Dieses Beispiel veranschaulicht in beeindruckender Weise die Vorteile der Verwendung des lösemittelbasierten reaktiven Klebstoffsystems mit hohem Feststoffanteil zum Beschichten oder Laminieren textiler Anwendungen.

## Patentansprüche

1. Verwendung eines lösemittelbasierten reaktiven Klebstoffsystems zum Beschichten oder Laminieren flexibler Substrate, insbesondere textiler Substrate, bevorzugt Textil mit Textil, mit Folien aller Art, mit Schaumstoff, mit Vliesen, mit Filz, sowie Körnern und Korund aller Art, wobei der Feststoffanteil des Klebstoffsystems, bezogen auf das Klebstoffsystem, mindestens 70 Gew.-% beträgt.

2. Verwendung eines Klebstoffsystems nach Anspruch 1,
**dadurch gekennzeichnet, dass** das Klebstoffsystem auf einer reaktive 1-Komponentenformulierungen basiert, wobei das Klebstoffsystem neben mindestens einem Lösemittel als weitere Klebstoffkomponenten aufweist:
· isocyanatreaktive organische Polymere zusammen mit Isocyanaten und/oder
· NCO-terminierte Polyurethanprepolymere.

3. Verwendung eines Klebstoffsystems nach Anspruch 1 oder 2,
**dadurch gekennzeichnet, dass** der Feststoffanteil, bezogen auf das Klebstoffsystem, mindestens 75 Gew.-%, insbesondere mindestens 80 Gew.-%, beträgt und/oder wobei der Feststoffanteil, bezogen auf das Klebstoffsystem, bis zu 95 Gew.-%, insbesondere bis zu 90 Gew.-%, beträgt.

4. Auftragssystem für ein lösemittelhaltiges, reaktives Klebstoffsystem zum Beschichten oder Laminieren flexibler Substrate, insbesondere textiler Substrate (5), bevorzugt mit Textil-, Vlies-, Filz-, Folien- und Schaumstoff-Substraten sowie Körnern und Korund, mit:
· einer Heizeinrichtung zum Aufnehmen und Erwärmen des Klebstoffs mit einem Feststoffanteil von mindestens 70 Gew.-%, bezogen auf das Klebstoffsystem,
· einer Druckerzeugungseinrichtung zum Druckbeaufschlagen des erwärmten Klebstoffs,
· mindestens einer Sprühdüse (4) zum Auftragen des sprühfähigen Klebstoffs auf eines der Substrate, und
· einer wärmeisolierten und beheizten Leitung zum Fördern des erwärmten und unter Druck stehenden Klebstoffs zu der mindestens einen Sprühdüse (4).

5. Auftragssystem nach Anspruch 4,
**dadurch gekennzeichnet, dass** die Heizeinrichtung ein Druckgefäß (1) mit einem Heizmantel umfasst.

6. Auftragssystem nach Anspruch 5,
**dadurch gekennzeichnet, dass** das Druckgefäß (1) ein Rührwerk (17) zum Homogenisieren des Klebstoffs umfasst.

7. Auftragssystem nach Anspruch 5 oder 6,
**dadurch gekennzeichnet, dass** das Druckgefäß (1) eine Füllstandsüberwachung (15) umfasst.

8. Auftragssystem nach einem der Ansprüche 4 bis 7,
**dadurch gekennzeichnet, dass** die Heizeinrichtung mit einem Vorratsbehälter (7) für Klebstoff verbunden ist, und ein Hilfsmittel zum Fördern des Klebstoffs aus dem Vorratsbehälter (7) in die Heizeinrichtung vorgesehen ist.

9. Auftragssystem nach Anspruch 8,
**dadurch gekennzeichnet, dass** der Vorratsbehälter (7) ein Transportgefäß, insbesondere ein Fass, und das Hilfsmittel eine Befüllungspumpe, insbesondere eine Fasspumpe (8), ist.

10. Auftragssystem nach einem der Ansprüche 4 bis 9,
**dadurch gekennzeichnet, dass** die wärmeisolierte und beheizte Leitung ein Heizschlauch (2), insbesondere ein PTFE-Druckschlauch, mit einem innenliegenden Heizleiter ist.

11. Auftragssystem nach einem der Ansprüche 4 bis 10,
**dadurch gekennzeichnet, dass** die mindestens eine Sprühdüse (4) einen Spülanschluss zum Reinigen der Sprühdüse (4) aufweist.

12. Auftragssystem nach einem der Ansprüche 4 bis 11,
**dadurch gekennzeichnet, dass** das Auftragssystem ein Spüldüsensystem zum Reinigen der Sprühdüse (4) umfasst.

13. Auftragssystem nach einem der Ansprüche 4 bis 12,
**dadurch gekennzeichnet, dass** das Auftragssystem eine Stickstoffbeaufschlagung (21) zum Schutz des reaktiven Klebstoffs in der Heizeinrichtung und/oder dem Vorratsbehälter (7) aufweist.

14. Auftragssystem nach einem der Ansprüche 4 bis 13,
**dadurch gekennzeichnet, dass** die Heizeinrichtung zum Aufnehmen und Erwärmen des Klebstoffs ausgebildet ist, wobei der Feststoffanteil, bezogen auf das Klebstoffsystem, mindestens 75 Gew.-%, insbesondere mindestens 80 Gew.-%, beträgt und/oder wobei der Feststoffanteil, bezogen auf das Klebstoffsystem, bis zu 95 Gew.-%, insbesondere bis zu 90 Gew.-%, beträgt.

15. Verfahren zum Auftragen eines lösemittelhaltigen, reaktiven Klebstoffsystems zum Beschichten oder Laminieren flexibler Substrate, insbesondere textiler Substrate (5), bevorzugt mit Textil-, Vlies-, Filz-, Folien- und Schaumstoff-Substraten sowie Körnern und Korund, mit den Schritten:
· Aufnehmen und Erwärmen des Klebstoffs mit einem Feststoffanteil von mindestens 70 Gew.-%, bezogen auf das Klebstoffsystem,
· unter Druck setzen des erwärmten Klebstoffs durch eine Druckerzeugungseinrichtung,
· Fördern des erwärmten und unter Druck stehenden Klebstoffs in einer wärmeisolierten und beheizten Leitung zu mindestens einer Sprühdüse (4),
· Auftragen des sprühfähigen Klebstoffs auf eines der Substrate mittels der mindestens einen Sprühdüse (4).

16. Verfahren nach Anspruch 15,
**dadurch gekennzeichnet, dass** der Klebstoff in der Heizeinrichtung mittels eines Rührwerks (17) homogenisiert wird.

17. Verfahren nach Anspruch 15 oder 16,
**dadurch gekennzeichnet, dass** die Heizeinrichtung mit einem Hilfsmittel aus einem Vorratsbehälter (7) mit Klebstoff befüllt wird.

18. Verfahren nach einem der Ansprüche 15 bis 17,
**dadurch gekennzeichnet, dass** der Klebstoff auf eine Temperatur zwischen 40°C und 70°C, bevorzugt zwischen 50°C und 60°C, erwärmt wird.

19. Verfahren nach einem der Ansprüche 15 bis 18,
**dadurch gekennzeichnet, dass** der Klebstoff mittels einer Stickstoffbeaufschlagungseinheit (21) unter Druck gesetzt wird.

20. Verfahren nach einem der Ansprüche 15 bis 19,
**dadurch gekennzeichnet, dass** der Feststoffanteil des Klebstoff, bezogen auf das Klebstoffsystem, mindestens 75 Gew.-%, insbesondere mindestens 80 Gew.-%, beträgt und/oder wobei der Feststoffanteil, bezogen auf das Klebstoffsystem, bis zu 95 Gew.-%, insbesondere bis zu 90 Gew.-%, beträgt.

21. Verwendung eines Auftragssystems zum Beschichten oder Laminieren flexibler Substrate, insbesondere textiler Substrate (5), mit einer Heizeinrichtung, einer Druckerzeugungseinrichtung, einer wärmeisolierten und beheizten Leitung und mindestens einer Sprühdüse (4) nach einem der Ansprüche 4 bis 14, zum Auftragen eines lösemittelhaltigen, reaktiven Klebstoffsystems mit einem Feststoffanteil von mindestens 70 Gew.-%, bezogen auf das Klebstoffsystem.

22. Verwendung eines Auftragssystems nach Anspruch 21,
**dadurch gekennzeichnet, dass** der Feststoffanteil des Klebstoffsystems, bezogen auf das Klebstoffsystem, mindestens 75 Gew.-%, insbesondere mindestens 80 Gew.-%, beträgt und/oder wobei der Feststoffanteil, bezogen auf das Klebstoffsystem, bis zu 95 Gew.-%, insbesondere bis zu 90 Gew.-%, beträgt.
